# EUROPEAN PATENT SPECIFICATION

(11) **EP 3 835 637 B1**
(45) Date of publication and mention of the grant of the patent: **07.06.2023**
(21) Application number: 19214904.5
(22) Date of filing: 10.12.2019
(51) Int. Cl.: F16L 1/15, B61B 12/12, F16L 1/20, F16L 3/06

(54) **CABLE MANAGING AND CLAMPING SYSTEM AND CORRESPONDING METHOD**
KABELVERWALTUNGS- UND -KLEMMSYSTEM UND ZUGEHÖRIGES VERFAHREN
SYSTÈME DE GESTION ET DE SERRAGE DE CÂBLES ET PROCÉDÉ CORRESPONDANT

(43) Date of publication of application: 16.06.2021
(73) Proprietor: De Regt Marine Cables B.V., 2931 LD Krimpen aan de Lek (NL)
(72) Inventor: van Leeuwen, Sander, 2931 LD Krimpen aan de Lek (NL); Boomsma, Wiebe, 2960 AA SMITWEG 6 (NL); van der Woude, Frederik Benjamin, 2931 LD Krimpen aan de Lek (NL); Haje Boer, Willem, 2931 LD Krimpen aan de Lek (NL); Rotteveel, Adrianus Theodorus, 2960 AA SMITWEG 6 (NL)
(74) Representative: Ipsilon

(56) References cited:
- GB-A- 2 492 836
- GB-A- 2 514 446

## Description

### TECHNICAL FIELD

Embodiments of the subject matter disclosed herein generally relate to the clamping of at least one cable on a pipe, in particular in the context of a deep-sea mining system used for harvesting material, referred as nodules, from the sea floor.

### DISCUSSION OF THE BACKGROUND

Oceans contain various mineral substances that sediment to form deposits, referred as nodules, on the seafloor. These nodules can be spread over large areas of the ocean floor.

These nodules may comprise for instance iron oxide, manganese oxide, copper, cobalt and/or nickel.

To collect these nodules, it is known to use a vehicle that rides on the seafloor and harvests nodules through a suction pipe system that connects the vehicle to a vessel in which the sucked nodules are stored.

The suction pipe system includes a rigid pipe connected to the vessel and equipped with suction pumps, and a flexible pipe connected to the rigid pipe and to the vehicle. Cables are coming from the vessel for powering the pumps and the vehicle.

It is known to attach the cables to the rigid pipe by using clamping devices arranged on the outer circumference of the rigid pipe. To attach a cable to the rigid pipe, an operator manually opens the jaws of the clamping device and introduces the cable into the opening defined between the clamps, and then release the jaws which thus close around the cable.

This operation is not only tedious but also dangerous for the operator who may be injured while manipulating the clamping device and the cable.

Furthermore, there is a risk of degradation of the cable if the operator has not correctly opened the jaws of the clamping device before introducing the corresponding cable into the clamping device and/or try to make the jaws open by pushing the cable onto the jaws.

Document GB2492836A deals with an apparatus for clamping elongate elements in a parallel piggybacked arrangement during subsea laying of the elements. The apparatus comprises opposed reciprocating jaws.

Document GB2514446A deals with a subsea system for mounting a cable to a pipeline. The subsea system comprises holding means and a track around the circumference of the pipeline.

There is thus a need to provide new cable managing and clamping system and corresponding method, that enable to overcome at least part of the drawbacks of the known clamping systems.

### SUMMARY

According to an embodiment, there is a cable managing and clamping system according to Claim 1.

According to a particular aspect, the cable managing and clamping system is according to any one of Claims 2 to 11.

It is also proposed a deep-sea mining system according to claim 12 and an assembly according to Claim 13.

According to an embodiment, there is a method for managing and clamping at least one cable on at least one piece of a pipe according to Claim 14.

### LIST OF FIGURES

The invention is described in more detail below by way of the figures that show embodiments of the invention.
- Figure 1 is a schematic view of a vehicle riding the seafloor for sucking nodules through a suction system to a vessel that collects them, the suction system including a rigid pipe with pumps and cables for powering the pumps and the vehicle;
- Figure 2 is a view of a part of a cable managing and clamping system according to an embodiment of the invention that can be used for automatically clamping/unclamping a cable to the rigid pipe during the deployment/retrieval of the rigid pipe;
- Figure 3 is a view of a clamping device of a cable managing and clamping system according to an embodiment of the invention, wherein the clamping device is clamped around a cable;
- Figure 4 is a view of a part of a cable managing and clamping system according to an embodiment of the invention, wherein the pipe is being lowered and a clamping device is in contact with first ramps of mechanical faces of a mechanical command system to cause the opening of said clamping device;
- Figure 5 is a view of a part of a cable managing and clamping system according to an embodiment of the invention, wherein the pipe continues to be lowered and the clamping device is in contact with straight edges of the mechanical faces that cause said clamping device to be maintained open while being positioned on both sides on the cable ;
- Figure 6 is a view from above of a clamping device of a cable managing and clamping system according to an embodiment of the invention, in the open state of the clamping device;
- Figure 7 is a view of a part of a cable managing and clamping system according to an embodiment of the invention, wherein the pipe continues to be lowered and the clamping device is in contact with second ramps of the mechanical faces that let the clamping device close around the cable.

### DESCRIPTION

The following description of the embodiments refers to the accompanying drawings. The same reference numbers in different drawings identify the same or similar elements. The following detailed description does not limit the invention. Instead, the scope of the invention is defined by the appended claims.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

According to embodiments, it is proposed a cable managing and clamping system that is part of a deep-sea mining system used for harvesting material, referred as nodules, such as manganese nodules, from the sea floor.

In the embodiment illustrated in the drawings, the cable managing and clamping system is used for clamping cables 5 on a rigid pipe 4.

The rigid pipe 4, also referred as a riser pipe, is provided with a pump system 7 and connected through a flexible pipe 1006 to a vehicle 1004.

The vehicle 1004, also referred as a "crawler", is configured to move (or ride) on the seafloor to harvest mineral deposits, referred as nodules. In a simplified way the vehicle 1004 may be considered as a big vacuum cleaner. The nodules can thus be sucked by the vehicle 1004 through the flexible pipe 1006 and rigid pipe 4, thanks to the pump system 7, to the top of the pipe 4 so as to collect the nodules in the vessel.

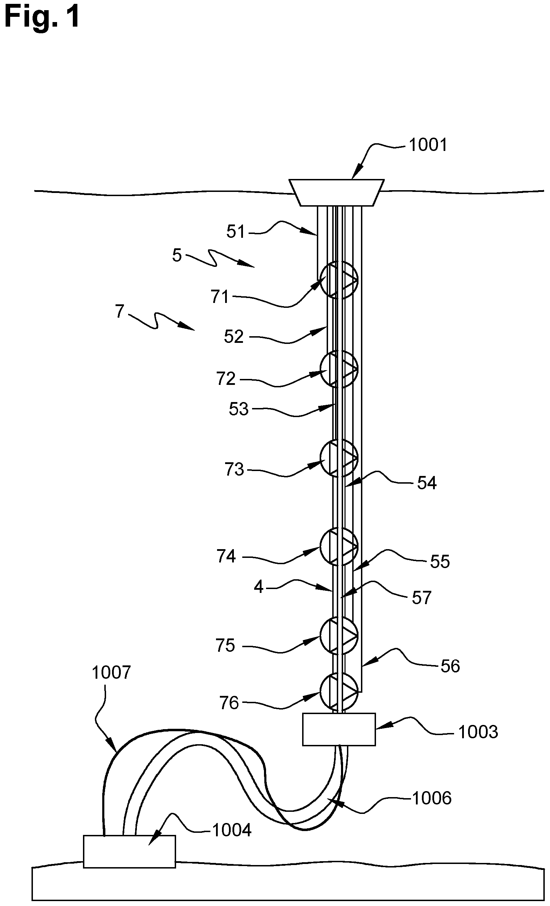

Suction power is provided by the pump system 7 that can include for instance six pumps 71, 72, 73, 74, 75, 76, also referred as booster stations, as schematically illustrated at Figure 1. The pumps can be located at various positions inside the rigid pipe 4, in particular at various sections of the pipe 4 as explained below. In particular each pump is integrated in a pipe section of pipe 4.

According to embodiments, after every N number of regular pipe segments assembled one to the other, N being a positive integer larger than 1, a special pipe section, referred as a pump section, that contains one of said pumps is assembled to the previous assembly of pipe sections. This pump section of the pipe can have a geometry that differs from a regular pipe section.

For each pump, there is a cable 51, 52, 53, 54, 55, 56, also referred as an umbilical cable, connected to said pump and configured to provide electrical power to the pump from a power generator embedded in the vessel 1001, and to allow communication between the pump and a control station. In other words, each pump 71, 72, 73, 74, 75, 76 is connected to an umbilical cable 51, 52, 53, 54, 55, 56 that extends from the vessel to the corresponding pump.

Each cable 51, 52, 53, 54, 55, 56 has a deck-end (ship-end) termination and a sea-end termination (pump-end termination). According to preferred embodiment, the terminations contain power and data connectors. At the ship-end the power connector is plugged into the power generator and the data connector is connected to the control station. The control station sends and receives data. Data includes for instance commands for forcing a shut down of the pumps, and/or temperature and pressure data coming from the pump.

When a pump section of the pipe is brought vertically for the deployment of the rigid pipe 4 as explained hereafter, the connectors of the sea-end termination of the corresponding cable are plugged to corresponding connectors provided on the pump section of the pipe. Then the pipe can further be deployed by assembling further section(s) to the previous pump section and lowering the corresponding assembly, and the cable is clamped along at least one section of the pipe as explained hereafter.

The cable managing and clamping system comprises a clamping system 2 enabling to clamp/unclamp the cables on the rigid pipe 4 and a mechanical command system 3 configured to command the clamping system 2. The cable managing and clamping system also comprises a cable managing system 1 enabling to roll and unroll the cables with appropriate position and orientation of the cables with regard to the rigid pipe 4.

The clamping system 2 is automatically and mechanically commanded by the mechanical command system 3 in function of the position of the clamping system 2 (with regard to the mechanical command system 3) during the movement of the pipe 4. The position of the clamping system 2 is considered along the moving direction of the pipe 4 that is parallel to the longitudinal axis A42 of the pipe 4, when the pipe 4 is oriented vertically.

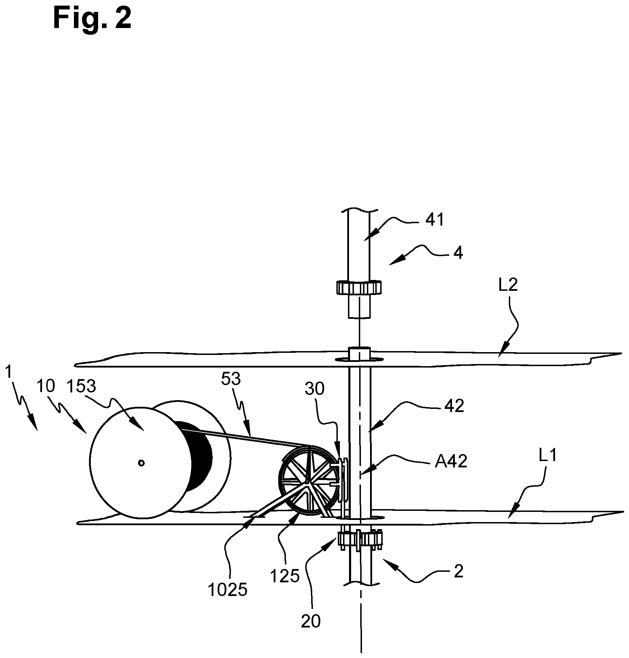

In the illustrated embodiment of Figure 2, the mechanical command system 3 is fixed to the vessel body via the sheave wheel 125.

### Rigid Pipe

In the embodiment illustrated at Figure 2, the rigid pipe 4 includes a plurality of pieces 41, 42 that can be assembled one to the other. In other words, the pieces 41, 42 are sections (or segments) of the rigid pipe. In particular the pieces 41, 42 are assembled one to the other during the deployment of the rigid pipe 4 from the vessel 1001 into the sea. For instance, the rigid pipe 4 can have a length of about 5 km. The rigid pipe can be made of steel. The length of a section of the pipe 4 can be about 25 meters.

At Figure 2, only two sections 41, 42 of the pipe 4 have been represented. However, the skilled man in the art understands that the pipe 4 can include a large number of sections that can include, for some of the sections, identical features and, for other sections, different features.

As detailed below, the clamping system 2 is fixed onto the peripheral wall of the rigid pipe 4. Preferably, each section of the pipe is provided with clamping devices 20.

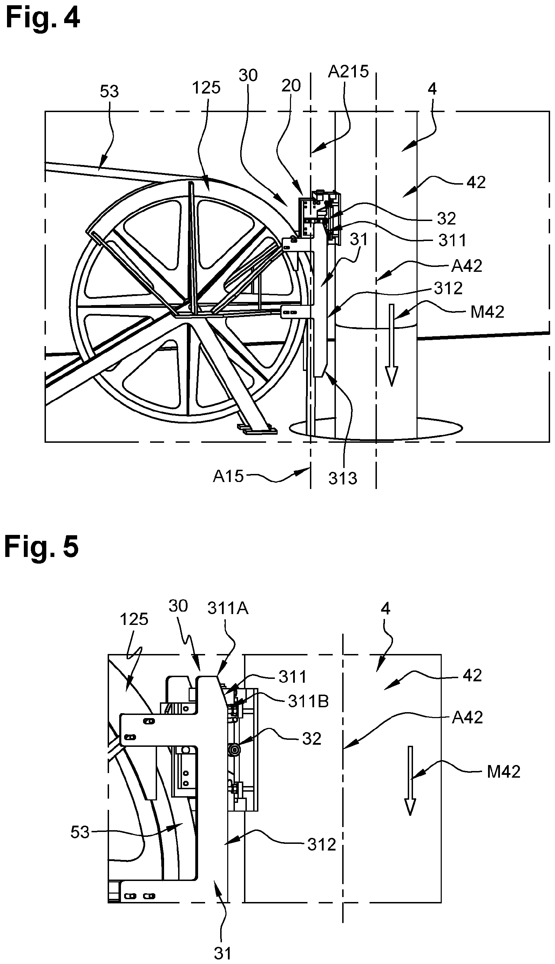

Deployment of the rigid pipe 4 can be managed by using an apparatus located on the vessel, such as a crane, that is configured to bring each of said pieces 41, 42 in a vertical orientation and move it downward to be assembled to a previous piece of pipe. In other words, axis A42 of a piece 42 of pipe 4 is oriented vertically and can be moved vertically, in particular downwardly for the deployment of pipe 4 as illustrated at Figure 4 by arrow M42.

The group of assembled sections 41, 42 of pipe 4 can then be lowered to enable the next section of pipe 4 to be brought and moved downward for being added to said group of assembled sections 41, 42 of pipe 4.

As illustrated for instance at Figure 2 and as detailed hereafter, a plurality of said sections of pipe 4 each is provided with clamping devices 20.

As explained above, pipe 4 is provided with pumps 71, 72, 73, 74, 75, 76 to enable the nodules to be suctioned through pipe 4 to the collecting point on the vessel 1001. According to embodiments each of said pumps is integrated in a section of the pipe 4.

Pipe 4 that is rigid is connected to the flexible pipe 1006. The flexible pipe 1006 is connected to the vehicle 1004 to enable the nodules to be suctioned through said flexible pipe 1006 and then through said pipe 4, without interfering with the displacement of the vehicle 1004 on the seafloor thanks to the flexibility of the flexible pipe 1006. The length of the flexible pipe 1006 can for instance be about 300 meters.

Preferably, a weight 1003, also referred as a "clump" is attached at the end of the pipe 4 to prevent the pipe 4 from swinging too much.

According to embodiments and as schematically illustrated at Figure 2, the vessel comprises a moon-pool with two levels L1 and L2. The sections of the pipe 4 are assembled from the top level L2 of the moon pool, for instance with a flange connection. Preferably each section is already provided with clamping devices 20. The assembled sections are then lowered. While the rigid pipe sections are passing through the bottom level L1 of the moon pool, the cables, that are deployed using drums 153 and sheave wheels 125 located at the bottom level L1 of the moon-pool to hang parallel to the pipe, are clamped to the pipe as explained hereafter.

### Cables

As illustrated at Figure 1, cables 5 include a plurality of cables 51, 52, 53, 54, 55, 56, 57 intended to be clamped on the peripheral wall of the pipe 4.

Said cables extend along the pipe 4 and are spaced, preferably regularly, one from another around the circumference of the pipe 4. In other words, cables are spaced angularly around axis A42 of pipe 4.

As explained above, cables 5 include cables 51, 52, 53, 54, 55, 56 for powering and communicating with the pumps 71, 72, 73, 74, 75, 76 that are associated with the pipe 4.

The cables 5 further include a cable 57 for powering and communicating with the vehicle 1004. As for above cited pump cables 51-56, cable 57 is connected to the power generator to provide electrical power to the vehicle 1004 and to the control station to allow communication between the vehicle 1004 and the control station.

Cable 57 has a part 1007 that extends below pipe 4 to be connected to the vehicle 1004 and let the vehicle 1004 move on the seafloor, in a given perimeter, without interfering with the movement of the vehicle 1004. According to embodiments, said part 1007 of cable 57 is attached to the flexible pipe 1006. In other words, the vehicle 1004 is connected to umbilical cable 57 whose flexible part 1007 is preferably loosely clamped, for instance using simple slings, on the flexible pipe 1006 that is connected to the rigid pipe 4.

According to a particular aspect, the umbilical cables used for the pumps and for the vehicle 1004 can be similar or identical.

When the pipe 4 is in a deployed state, each umbilical cable 51-57 is clamped onto the rigid pipe 4 with a corresponding clamping device 20, for instance every 25 meters. Umbilical cables 51-57 extend along the exterior wall of the rigid pipe.

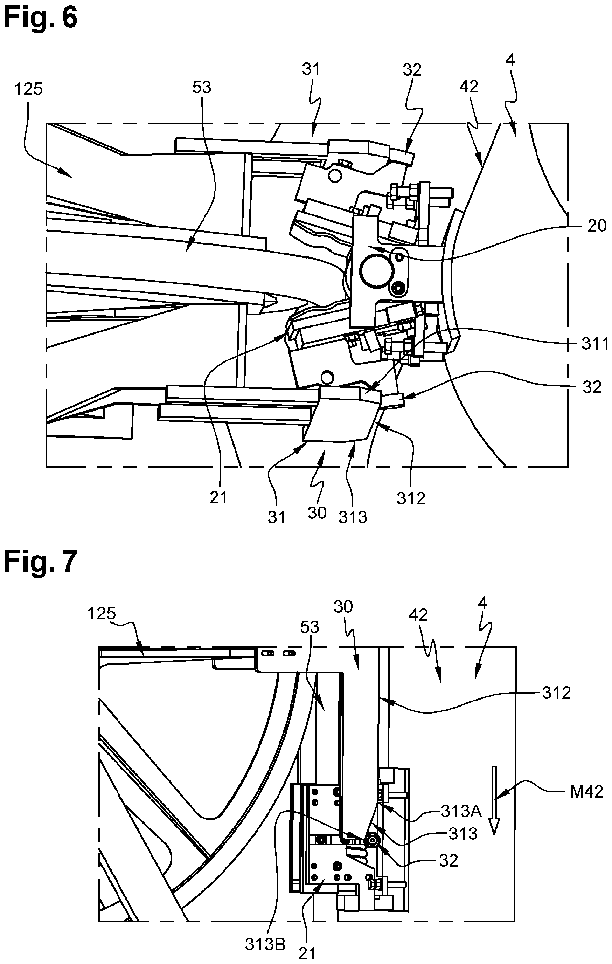

In the embodiment illustrated at Figures 2 to 7, for purpose of simplicity, only one cable 53 is illustrated along with corresponding parts of the managing and clamping system as detailed hereinafter.

The skilled man in the art understands that the specification provided for one cable 53 to be clamped to pipe 4 also applies to the other cables 51, 52, 54, 55, 56, 57 and to corresponding parts of the managing and clamping system.

In particular, in the following description and with regard to Figures 4 to 6, the clamping operation is explained for cable 53 through the use of a clamping device 20 that is fixed on a section 42 of pipe 4 along with the use of a command device 30 that enables to make the jaws 21 of the clamping device 20 to open or close in function of the vertical position of clamping device 20 (with regard to the command device 30 that is fixed to the sheave wheel 125 and thus indirectly to the vessel), said clamping device 20 being fixed on a section 42 of the pipe that is moved vertically (in particular downwardly for the clamping and upwardly for unclamping as explained hereafter).

As illustrated at Figure 2, section 42 of pipe 4 is provided with a group of clamping devices 20 distributed around the circumference of pipe 4 for clamping cables. Only one cable managing device 10 is represented for simplicity, but the cable managing system 1 comprises a cable managing device 10 for each cable to be clamped to the pipe 4 with a corresponding clamping device 20. Similarly, only one mechanical command device 30 is represented for simplicity, but the mechanical command system 3 comprises a mechanical command device 30 for each cable to be clamped to the pipe 4 with a corresponding clamping device 20. The skilled man in the art thus understands that the following description provided for the clamping of cable 53 with the clamping device 20 in cooperation with the mechanical command device 30 and the cable managing device 10 also applies to other cables intended to be clamped to the pipe 4, in particular to a plurality of sections of the pipe.

As illustrated at Figure 2, cable 53 is stored on a drum 153 and partially unrolled from the drum 153 to be guided by a sheave wheel 125. The sheave wheel 125 is fixed to the vessel for instance by legs 1025. The cable 53 is guided by said sheave wheel 125 that enables the cable 53 to extend sensibly vertically. In other words, the sheave wheel 125 enables the unrolled part of the cable 53 to hang from the sheave wheel 125 sensibly vertically, that is to say parallel to the pipe 4.

### Cable managing device

The cable managing system 1 includes for each cable to be clamped to the pipe 4 a cable managing device 10. As illustrated at Figure 2, for cable 53, cable managing device 10 includes a sheave wheel 125 and a drum 153 for unwinding (i.e. for lowering the cable during a deploying phase) and winding up (i.e. for raising the cable during a recovery phase) said cable 53 in the sea above the vessel 1001.

### Clamping device

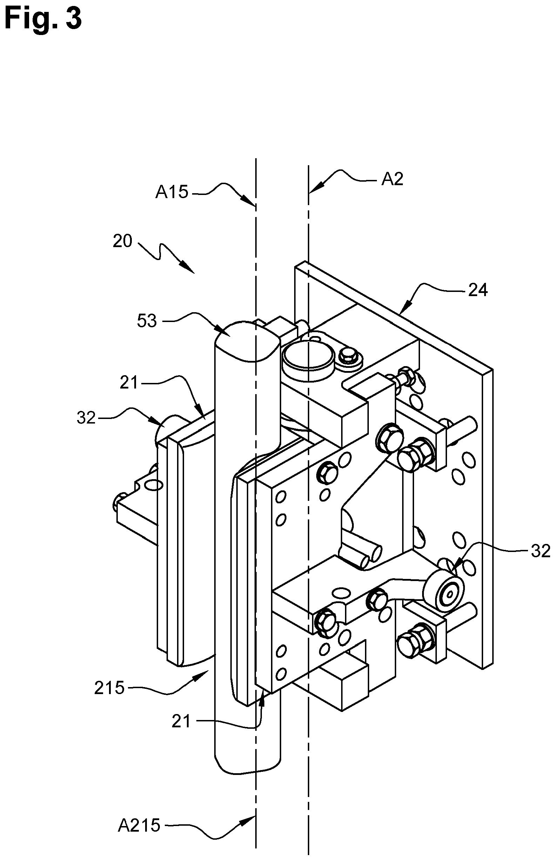

According to the embodiment illustrated at Figure 3, the clamping device 20 includes a plate 24 for fixing the clamping device 20 to the pipe 4. The clamping device 20 comprises two jaws 21 that can pivot around axis A2. When the plate 24 is fixed to the pipe, axis A2 is parallel to axis A42 of the pipe 4.

The jaws 21 define between them a through-passage 215 for the cable 53.

The two jaws 21 are relatively movable to take a relative position between an open position enabling the introduction and exit of the cable 53 relatively to said through-passage 215, and a closed position enabling to clamp the cable 53 when the cable 53 extends between the jaws 21.

Axis A215 of the through-passage 215 is parallel to axis A42 of the pipe 4. According to embodiments, when cable 53 is clamped, the clamped portion of the cable 53 extends parallel to the pipe 4.

The through-path 215 of the clamping device 20 has an axis A215 that is parallel or coaxial to the axis A15 of the pathway along which the cable 53 hangs down out of the sheave wheel 125.

As detailed hereafter, clamping of cable 53 is done by moving the pipe 4, and thus the clamping device 20, so as to have the jaws 21 of the clamping device 20 opened and positioned on both sides of a portion of the cable 53 to be clamped. Then the clamping device 20 continues to move with regard to the sheave wheel 125 so as to have the jaws 21 of the clamping device 20 closed on said portion of cable 53. The mechanism for opening and closing the jaws is explained hereafter.

Each jaw 21 is provided with a roller 32. In particular the roller is arranged laterally on the exterior of the jaw 21.

According to the embodiment of Figure 3, each roller 32 is arranged, in view in a plan passing through the pivoting axis A2 and the through-passage axis A215, on one side of the pivoting axis A2 that is opposite to the through-passage 215 of said at least one clamping device 2. In other words, each roller 32 is behind the pivoting axis A2 when considering the clamping device 20 in a plan passing through axis A215 and axis A2.

### Mechanical command device

The mechanical command system 3 includes, for each cable 53, a mechanical command device 30 that is associated to a corresponding cable managing device 10 and to a corresponding clamping device 20.

In the illustrated embodiment, for cable 53, a first part 32 of the mechanical command device 30 is fixed on the clamping device 20 and a second part 31 is fixed on the sheave wheel 125 of the cable managing device 10.

In particular, each roller 32 that is fixed to a jaw 21 of said clamping device 20 forms said first part of said mechanical command device 30.

The second part 31 of the mechanical command device 30 includes, preferably for each roller 32, a mechanical face 31 that is mounted fix with regard to a support structure 1025 of the sheave wheel 125. The mechanical face is used as a face cam, along with the corresponding roller 32 that can be considered as a "follower" that rides on the mechanical face 31, following the geometrical form of the mechanical face 31, during the vertical movement of the pipe 4, when the clamping device 20 is at the level of the mechanical command device 30.

More generally the mechanical face 31 can be mounted fix with regard to the vessel. In the embodiments, the support structure 1025 of the sheave wheel 125 is mounted fix on the vessel and the mechanical face 31 is mounted on this support structure 1025.

Thus, each mechanical face 31 is configured to cooperate with a roller 32 of the clamping device 20 for making the clamping device 20 move from said closed position to said open position and vice-versa.

### Mechanical face

The below description of one mechanical face 31 intended to cooperate with a roller 32 applies also to the other mechanical face 31 intended to cooperate with the other roller of the clamping device.

The mechanical face 31 is described below from top to bottom of said mechanical face 31.

The mechanical face 31 comprises a first portion that has a ramp 311 inclined from a high point 311A to a low point 311B that are arranged so that a sliding of a roller 32 of the clamping device from the high point 311A to the low point 311B of the ramp 311 causes the jaws 21 to move from the closed position to the open position.

When the roller is initially above and out of the mechanical face and that the pipe 4 is lowered, making the clamping device 20 come into contact with the mechanical command device 30, the roller begins by riding the ramp 311. The orientation of the ramp 311 is such that the roller 32 of the clamping device 20 is pushed backwards when riding said ramp during the lowering of the pipe, what causes the clamping device 20 to open.

Conversely, during a raising of the pipe 4, said ramp 311 progressively no more pushes the roller what causes the jaws 21 to move from the open position to the closed position since the jaws are spring loaded in a default closed position.

The mechanical face 31 further comprises a second portion that continues downwardly the low point 311B of said ramp 311 with a straight (vertical) edge 312 so that a sliding of said roller 32 along this edge 312 causes the jaws 21 to be maintained in the open position. This maintain of the jaws 21 in the open position thanks to edge 312 also occurs during the raising of the pipe.

The mechanical face 31 further comprises a third portion that downwardly continues said straight edge 312 with a ramp 313 (opposite to ramp 311) inclined from a high point 313A to a low point 313B that are arranged so that a sliding of said roller 32 from the high point 313A to the low point 313B of the ramp 313 causes the jaws 21 to move from the open position to the closed position. Such sliding corresponds to a lowering phase of the pipe 4 when the roller arrives at the bottom of straight edge 312 and continues by riding on the ramp 313 that progressively no more pushes the roller backward what causes the jaws 21 to move from the open position to the closed position since the jaws are spring loaded in a default closed position.

Conversely, during a raising of the pipe, the roller 32 comes from below said mechanical face 31 and contacts said ramp 313 at first, from low point 313B to high point 313A, so that the roller 32 of the clamping device 20 is pushed backwards by the ramp 313 of the mechanical face 31, what causes the clamping device to open.

The relative position of the jaws of the clamping device 20, i.e. open or closed, thus depends on the position of the clamping device 20, and thus of the pipe 4, with regard to the mechanical face 31, during the lowering or raising of the pipe 4.

The position of the clamping device 20 that is considered is the position of the clamping device 20 along the moving direction of the pipe 4.

### Example of clamping

The cable managing and clamping system proposed in the above embodiment may be used to execute a method for managing and clamping at least one cable 53 on a section 42 of the pipe 4. The method applies for other sections of the pipe and also for other cables to be clamped.

The cable 53 is partially unrolled from the drum 153 and hangs from the sheave wheal 125 sensibly vertically.

For the deployment of the pipe 4, section 42 is oriented vertically and lowered for instance by using a crane. The section 42 is provided with the clamping device 20 that is initially above the mechanical command device 30 in a default closed position.

During the lowering of section 42, the rollers 32 of the clamping device 20 ride on the mechanical faces 31 of the command device 30.

The rollers thus go down the ramp 311 that pushes back the rollers 32 and thus causes the jaws to open.

While the lowering of the section 42 continues, each roller 32 rides on the straight edge 312 that enables to maintain the jaws open and to have the jaws positioned on both side of a portion of the cable that extends through the through-passage 215 defined by the jaws of the clamping device.

The mechanical command device 30 is arranged with the sheave wheel 125 so that, during the lowering of the pipe 4, the clamping device 20 opens and gets positioned on both sides of the cable 53 so that the cable gets positioned in the clamping device.

Then the rollers 32 rides on the ramp 313, that is oriented in a direction opposite to the ramp 311, so that the jaws 21 can return in the default closed position, around the cable 53.

Retrieval of the pipe 4 can be executed similarly by raising the pipe 4, so that the rollers 32 ride on the mechanical faces 31, in reverse direction with regard to the above explained riding of the rollers during deployment of the pipe, what causes the clamping device to open and, while the pipe continues to be raised, let the cable exit the clamping device.

Thanks to such a cable managing and clamping system that enable a mechanical automatic clamping on the "way-down" (deployment of the system), a cable intended to be clamped to the pipe does not have to be pushed onto the clamping device to open the jaws, thus preventing damage of the cable and reducing the risk of injury for the operator. For the "way-up" (retrieval of the system) the system similarly in reverse direction.

Such a cable managing and clamping system enables to automatically clamp and unclamp the cable to prevent damage on the cable and prevent human interaction with the clamping device for safety reasons, in a reliable and simple way.

## Claims

1. A cable managing and clamping system for clamping at least one cable (53) on at least one piece (42) of a pipe (4),
said cable managing and clamping system comprising:
- at least one cable managing device (10) for unwinding and winding up a cable (53);
- at least one clamping device (20) having jaws (21) defining between said jaws a through-passage (215) for the cable (53),
said two jaws (21) being relatively movable to take a relative position between an open position enabling the introduction and exit of the cable (53) relatively to said through-passage (215), and a closed position enabling to clamp the cable (53) when the cable (53) extends between the jaws (21);
- at least one piece (42) of a pipe (4) on which said at least one clamping device (20) is fixed, said at least one piece (42) of the pipe (4) having a longitudinal axis (A42), and being intended to be moved (M42) in a direction parallel to said longitudinal axis;
**characterized in that** said cable managing and clamping system further comprises:
- at least one mechanical command device (30) configured to automatically command the relative position of the jaws (21) of said clamping device (20) in function of the position of said at least one clamping device (20) during the movement of said at least one piece (42) of the pipe (4), to clamp or unclamp said at least one cable (53) with said at least one piece (42) of pipe (4);
wherein, at least one of the jaws (21) of said at least one clamping device (20) being provided with a first part (32) of said at least one mechanical command device (30), the cable managing and clamping system comprising a support structure (1025) for supporting a sheave wheel (125), the mechanical command device (30) includes, for each first part (32), a second part (31) that is mounted fix with regard to the support structure (1025) of the sheave wheel (125), said second part (31) being configured to cooperate with said at least one first part (32) for making said at least one clamping device (20) move from said closed position to said open position and vice-versa.

2. The cable managing and clamping system according to Claim 1, wherein the through-path (215) of said at least one clamping device (20) has an axis (A215) that is parallel or coaxial to the axis (A15) of the pathway along which the cable (53) hangs down out of the sheave wheel (125).

3. The cable managing and clamping system according to Claim 1 or 2, wherein each jaw (21) is provided with said first part (32) of said at least one mechanical command device (30).

4. The cable managing and clamping system according to any one of Claims 1 to 3, wherein said first part (32) is a roller.

5. The cable managing and clamping system according to any one of Claims 1 to 4, wherein,
the jaws (21) being configured to pivot around a pivoting axis (A2),
said first part (32) is arranged, in view in a plan passing through the pivoting axis (A2) and the through-passage axis (A215), on one side of the pivoting axis (A2) that is opposite to the through-passage (215) of said at least one clamping device (20).

6. The cable managing and clamping system according to any one of Claims 1 to 5, wherein the second part (31) of said at least one mechanical command device (30) comprises a first portion that has a ramp (311) inclined from a high point (311A) to a low point (311B) that are arranged so that a sliding of said first part (32) from the high point (311A) to the low point (311B) of the ramp (311) of the first portion of the second part (31) causes the jaws (21) to move from the closed position to the open position.

7. The cable managing and clamping system according to any one of Claims 1 to 6, wherein the second part (31) of said at least one mechanical command device (30) comprises a second portion that has an edge (312) configured so that a sliding of said first part (32) along this edge (312) causes the jaws (21) to be maintained in the open position.

8. The cable managing and clamping system according to any one of Claims 1 to 7, wherein the second part (31) of said at least one mechanical command device (30) comprises a third portion that has a ramp (313) inclined from a high point (313A) to a low point (313B) that are arranged so that a sliding of said first part (32) from the high point (313A) to the low point (313B) of the ramp (313) of the third portion of the second part (31) causes the jaws (21) to move from the open position to the closed position.

9. The cable managing and clamping system according to any one of Claims 1 to 8, wherein said at least one clamping device (20) comprises a plurality of clamping devices fixed on said at least one piece (42) of pipe (4),
said at least one mechanical command device (30) comprising a mechanical command device for each clamping device (20).

10. The cable managing and clamping system according to any one of Claims 1 to 9, wherein said at least one cable managing device (10) includes a plurality of cable managing devices (10) each including a sheave wheel (125).

11. The cable managing and clamping system according to any one of Claims 1 to 10, wherein the cable managing and clamping system includes a plurality of pieces (41, 42) of pipe (4), intended to be assembled one to another, each piece (41, 42) of pipe being provided with at least one clamping device (20), said at least one mechanical command device (30) comprising a mechanical command device for each clamping device (20).

12. A deep sea mining system comprising a:
- a cable managing and clamping system according to any one of claims 1 to 11;
- a rigid pipe (4) formed by the assembly of a plurality of pieces (42) of pipe;
- a pump system (7) comprising a plurality of pumps (71, 72, 73, 74, 75, 76) fixed to the rigid pipe (4);
- for each pump, a cable (51, 52, 53, 54, 55, 56) connected to said pump and configured to provide electrical power to the pump and allow communication between the pump and a control station;
- a vehicle (1004) that is configured to ride on the seabed and suck materials, such as manganese nodules, that are present on the seafloor;
- a flexible pipe (1007) attached to the vehicle (1004) which is configured to enable said materials to be sucked through said flexible pipe, and which is connected to said pipe (4);
- a cable (57, 1007) connected to said vehicle (1004) and configured to provide electrical power to the vehicle (1004) and allow communication between the vehicle (1004) and the control station.

13. An assembly comprising a vessel (1001) and a deep-sea mining system according to claim 12.

14. A method for managing and clamping at least one cable (53) on at least one piece (42) of a pipe (4), wherein said method comprises the steps of:
- providing at least one cable (53) that hangs down from a sheave wheel (125);
- providing at least one piece (42) of a pipe (4), having a longitudinal axis (A42),
- providing at least one clamping device (20) fixed onto said at least one piece (42) of pipe (4), said at least one clamping device (20) having jaws (21) defining between said jaws a through-passage (215) for the cable (53),
said two jaws (21) being relatively movable between an open position enabling the introduction and exit of the cable (53) relatively to said through-passage (215), and a closed position enabling to clamp the cable (53) when the cable (53) extends between the jaws (21);
- making said at least one piece (42) of pipe (4) move in a direction parallel to said longitudinal axis (A42); and
**characterized in that** the method further comprises the step of:
- with at least one mechanical command device (30), automatically command the relative position of the jaws (21) of said at least one clamping device (20) in function of the position of said at least one clamping device (20) during the movement of said at least one piece (42) of the pipe (4), to clamp or unclamp said at least one cable (53) with said at least one piece (42) of pipe (4).

## Patentansprüche

1. Kabelverwaltungs- und -klemmsystem zum Klemmen mindestens eines Kabels (53) auf mindestens einem Stück (42) eine Rohrs (4),
wobei das Kabelverwaltungs- und -klemmsystem Folgendes umfasst:
- mindestens eine Kabelverwaltungsvorrichtung (10) zum Abwickeln und Aufwickeln eines Kabels (53);
- mindestens einen Klemmvorrichtung (20) mit Backen (21), wobei zwischen den Backen ein Durchgang (215) für das Kabel (53) definiert ist,
wobei die zwei Backen (21) relativ beweglich sind, um eine relative Position zwischen einer offenen Position, die die Einführung und den Austritt des Kabels (53) relativ zu dem Durchgang (215) ermöglicht, und einer geschlossenen Position einzunehmen, die es ermöglicht, das Kabel (53) zu klemmen, wenn sich das Kabel (53) zwischen den Backen (21) erstreckt;
- mindestens ein Stück (42) eines Rohr (4), auf dem die mindestens eine Klemmvorrichtung (20) fixiert ist, wobei das mindestens eine Stück (42) des Rohrs (4) eine Längsachse (A42) aufweist und ausgelegt ist, um in eine Richtung parallel zu der Längsachse bewegt zu werden (M42);
**dadurch gekennzeichnet, dass** das Kabelverwaltungs- und -klemmsystem weiter Folgendes umfasst:
- mindestens eine mechanische Steuervorrichtung (30), die konfiguriert ist, um automatisch die relative Position der Backen (21) der Klemmvorrichtung (20) in Funktion der mindestens einen Klemmvorrichtung (20) während der Bewegung des mindestens einen Stücks (42) des Rohrs (4) zu steuern, um das mindestens eine Kabel (53) mit dem mindestens einen Stück (42) Rohr (4) zu klemmen oder freizugeben,
wobei mindestens eine der Backen (21) der mindestens einen Klemmvorrichtung (20) mit einem ersten Teil (32) der mindestens einen mechanischen Steuervorrichtung (30) ausgestattet ist, wobei das Kabelverwaltungs- und -klemmsystem eine Tragestruktur (1025) umfasst, um eine Seilscheibe (125) zu tragen, die mechanische Steuervorrichtung (30) für jeden ersten Teil (32) einen zweiten Teil (31) beinhaltet, der fest mit Bezug auf die Tragestruktur (1025) der Seilscheibe (125) montiert ist, wobei der zweite Teil (31) konfiguriert ist, um mit dem mindestens einen ersten Teil (32) zusammenzuarbeiten, um zu bewirken, dass sich die mindestens einen Klemmvorrichtung (20) aus der geschlossenen Position in die offene Position und umgekehrt bewegt.

2. Kabelverwaltungs- und -klemmsystem nach Anspruch 1, wobei der Durchgang (215) der mindestens einen Klemmvorrichtung (20) eine Achse (A215) aufweist, die parallel oder koaxial zur Achse (A15) des Durchgangs ist, entlang dem das Kabel (53) aus der Seilscheibe (125) nach unten hängt.

3. Kabelverwaltungs- und -klemmsystem nach Anspruch 1 oder 2, wobei jede Backe (21) mit dem ersten Teil (32) der mindestens einen mechanischen Steuervorrichtung (30) ausgestattet ist.

4. Kabelverwaltungs- und -klemmsystem nach einem der Ansprüche 1 bis 3, wobei der erste Teil (32) eine Rolle ist.

5. Kabelverwaltungs- und -klemmsystem nach einem der Ansprüche 1 bis 4, wobei,
da die Backen (21) konfiguriert sind, um um eine Schwenkachse (A2) zu schwenken, der erste Teil (32) sichtbar in einer Ebene angeordnet ist, die durch die Schwenkachse (A2) und die Durchgangsachse (A215) auf einer Seite der Schwenkachse (A2) verläuft, die dem Durchgang (215) der mindestens einen Klemmvorrichtung (20) gegenüberliegt.

6. Kabelverwaltungs- und -klemmsystem nach einem der Ansprüche 1 bis 5, wobei der zweite Teil (31) der mindestens einen mechanischen Steuervorrichtung (30) einen ersten Abschnitt umfasst, der eine Rampe (311) aufweist, die von einem hohen Punkt (311A) zu einem niedrigen Punkt (311B) geneigt ist, die derart angeordnet sind, dass ein Gleiten des ersten Teils (32) vom hohen Punkt (311A) zum niedrigen Punkt (311B) der Rampe (311) des ersten Abschnitts des zweiten Teils (31) verursacht, dass sich die Backen (21) aus der geschlossenen Position in die offene Position bewegen.

7. Kabelverwaltungs- und -klemmsystem nach einem der Ansprüche 1 bis 6, wobei der zweite Teil (31) der mindestens einen mechanischen Steuervorrichtung (30) einen zweiten Abschnitt umfasst, der eine Kante (312) aufweist, die derart konfiguriert ist, dass ein Gleiten des ersten Teils (32) entlang dieser Kante (312) verursacht, dass die Backen (21) in der offenen Position gehalten werden.

8. Kabelverwaltungs- und -klemmsystem nach einem der Ansprüche 1 bis 7, wobei der zweite Teil (31) der mindestens einen mechanischen Steuervorrichtung (30) einen dritten Abschnitt umfasst, der eine Rampe (313) aufweist, die von einem hohen Punkt (313A) zu einem niedrigen Punkt (313B) geneigt ist, die derart angeordnet sind, dass ein Gleiten des ersten Teils (32) vom hohen Punkt (313A) zum niedrigen Punkt (313B) der Rampe (313) des dritten Abschnitts des zweiten Teils (31) verursacht, dass sich die Backen (21) aus der offenen Position in die geschlossene Position bewegen.

9. Kabelverwaltungs- und -klemmsystem nach einem der Ansprüche 1 bis 8, wobei die mindestens einen Klemmvorrichtung (20) eine Vielzahl von Klemmvorrichtungen umfasst, die an das mindestens eine Stück (42) Rohr (4) befestigt ist, wobei die mindestens eine mechanische Steuervorrichtung (30) eine mechanische Steuervorrichtung für jede Klemmvorrichtung (20) umfasst.

10. Kabelverwaltungs- und -klemmsystem nach einem der Ansprüche 1 bis 9, wobei die mindestens eine Kabelverwaltungsvorrichtung (10) eine Vielzahl von Kabelverwaltungsvorrichtungen (10) beinhaltet, die jeweils eine Seilscheibe (125) beinhalten.

11. Kabelverwaltungs- und -klemmsystem nach einem der Ansprüche 1 bis 10, wobei das Kabelverwaltungs- und -klemmsystem eine Vielzahl von Stücken (41, 42) Rohr (4) umfasst, die ausgelegt sind, um miteinander verbunden zu werden, wobei jedes Stück (41, 42) Rohr mit mindestens einer Klemmvorrichtung (20) ausgestattet ist, wobei die mindestens eine mechanische Steuervorrichtung (30) eine mechanische Steuervorrichtung für jede Klemmvorrichtung (20) umfasst.

12. Tiefsee-Bergbausystem, umfassend:
- ein Kabelverwaltungs- und -klemmsystem nach einem der Ansprüche 1 bis 11,
- ein starres Rohr (4), das durch den Zusammenbau einer Vielzahl von Stücken (42) Rohr gebildet ist;
- ein Pumpensystem (7), umfassend eine Vielzahl von Pumpen (71, 72, 73, 74, 75, 76), die an das starre Rohr (4) fixiert sind;
- bei jeder Pumpe ein Kabel (51, 52, 53, 54, 55, 56), das mit der Pumpe verbunden und konfiguriert ist, um der Pumpe elektrischen Strom bereitzustellen und eine Kommunikation zwischen der Pumpe und einer Steuerstation zu ermöglichen;
- ein Fahrzeug (1004), das konfiguriert ist, um auf dem Meeresboden zu fahren und Materialien aufzusaugen, wie z. B. Manganknollen, die auf dem Meeresgrund vorhanden sind;
- ein flexibles Rohr (1007), das an das Fahrzeug (1004) befestigt ist, das konfiguriert ist, um zu ermöglichen, dass die Materialien durch das flexible Rohr aufgesaugt werden, und das mit dem Rohr (4) verbunden ist;
- ein Kabel (57, 1007), das mit dem Fahrzeug (1004) verbunden und konfiguriert ist, um dem Fahrzeug (1004) elektrischen Strom bereitzustellen und eine Kommunikation zwischen dem Fahrzeug (1004) und der Steuerstation zu ermöglichen.

13. Zusammenbau, umfassend ein Schiff (1001) und ein Tiefsee-Bergbausystem nach Anspruch 12.

14. Verfahren zum Verwalten und Klemmen mindestens eines Kabels (53) auf mindestens einem Stück (42) eine Rohrs (4), wobei das Verfahren die Folgenden Schritte umfasst:
- Bereitstellen mindestens eines Kabels (53), das aus einer Seilscheibe (125) nach unten hängt;
- Bereitstellen mindestens eines Stücks (42) eines Rohrs (4), das eine Längsachse (A42) aufweist,
- Bereitstellen mindestens einer Klemmvorrichtung (20), die an das mindestens eine Stück (42) Rohr (4) befestigt ist, wobei die mindestens einen Klemmvorrichtung (20) Backen (21) aufweist, wobei zwischen den Backen ein Durchgang (215) für das Kabel (53) definiert ist,
wobei die zwei Backen (21) relativ beweglich zwischen einer offenen Position, die die Einführung und den Austritt des Kabels (53) relativ zu dem Durchgang (215) ermöglicht, und einer geschlossenen Position sind, die es ermöglicht, das Kabel (53) zu klemmen, wenn sich das Kabel (53) zwischen den Backen (21) erstreckt;
- Verursachen, dass sich mindestens ein Stück (42) Rohr (4) in eine Richtung parallel zu der Längsachse bewegt (A42); und
**dadurch gekennzeichnet, dass** das Verfahren weiter den folgenden Schritt umfasst:
- mit mindestens einer mechanischen Steuervorrichtung (30) automatisches Steuern der relativen Position der Backen (21) der mindestens einen Klemmvorrichtung (20) in Funktion der Position der mindestens einen Klemmvorrichtung (20) während der Bewegung des mindestens einen Stücks (42) des Rohrs (4), um das mindestens eine Kabel (53) mit dem mindestens einen Stück (42) Rohr (4) zu klemmen oder freizugeben.

## Revendications

1. Système de gestion et de serrage de câble pour serrer au moins un câble (53) sur au moins un morceau (42) d'un tuyau (4),
ledit système de gestion et de serrage de câble comprenant :
au moins un dispositif de gestion de câble (10) pour dérouler et enrouler un câble (53) ;
au moins un dispositif de serrage (20) ayant des mâchoires (21) définissant entre lesdites mâchoires, un passage débouchant (215) pour le câble (53),
lesdites deux mâchoires (21) étant relativement mobiles pour prendre une position relative entre une position ouverte permettant l'introduction et la sortie du câble (53) par rapport audit passage débouchant (215), et une position fermée permettant de serrer le câble (53) lorsque le câble (53) s'étend entre les mâchoires (21) ;
au moins un morceau (42) d'un tuyau (4) sur lequel ledit au moins un dispositif de serrage (20) est fixé, ledit au moins un morceau (42) de tuyau (4) ayant un axe longitudinal (A42) et étant prévu pour être déplacé (M42) dans une direction parallèle audit axe longitudinal ;
**caractérisé en ce que** ledit système de gestion et de serrage de câble comprend en outre :
au moins un dispositif de commande mécanique (30) configuré pour commander automatiquement la position relative des mâchoires (21) dudit dispositif de serrage (20) en fonction de la position dudit au moins un dispositif de serrage (20) pendant le déplacement dudit au moins un morceau (42) de tuyau (4), pour serrer ou desserrer ledit au moins un câble (53) avec ledit au moins un morceau (42) de tuyau (4) ;
dans lequel, au moins l'une des mâchoires (21) dudit au moins un dispositif de serrage (20) étant prévue avec une première partie (32) dudit au moins un dispositif de commande mécanique (30), le système de gestion et de serrage de câble comprenant une structure de support (1025) pour supporter une roue à gorge (125), le dispositif de commande mécanique (30) comprend, pour chaque première partie (32), une seconde partie (31) qui est montée fixe par rapport à la structure de support (1025) de la roue à gorge (125), ladite seconde partie (31) étant configurée pour coopérer avec ladite au moins une première partie (32) pour que ledit au moins un dispositif de serrage (20) se déplace de ladite position fermée à ladite position ouverte et vice versa.

2. Système de gestion et de serrage de câble selon la revendication 1, dans lequel la trajectoire débouchante (215) dudit au moins un dispositif de serrage (20) a un axe (A215) qui est parallèle ou coaxial à l'axe (A15) de la voie de passage le long de laquelle le câble (53) pend hors de la roue à gorge (125).

3. Système de gestion et de serrage de câble selon la revendication 1 ou 2, dans lequel chaque mâchoire (21) est prévue avec ladite première partie (32) dudit au moins un dispositif de commande mécanique (30).

4. Système de gestion et de serrage de câble selon l'une quelconque des revendications 1 à 3, dans lequel ladite première partie (32) est un rouleau.

5. Système de gestion et de serrage de câble selon l'une quelconque des revendications 1 à 4, dans lequel :
les mâchoires (21) étant configurées pour pivoter autour d'un axe de pivotement (A2), ladite première partie (32) est agencée, sur une vue sur un plan passant par l'axe de pivotement (A2) et l'axe de passage débouchant (A215), d'un côté de l'axe de pivotement (A2) qui est opposé au passage débouchant (215) dudit au moins un dispositif de serrage (20).

6. Système de gestion et de serrage de câble selon l'une quelconque des revendications 1 à 5, dans lequel la seconde partie (31) dudit au moins un dispositif de commande mécanique (30) comprend une première portion qui a une rampe (311) inclinée à partir d'un point haut (311A) jusqu'à un point bas (311B) qui sont agencés de sorte qu'un coulissement de ladite première partie (32) du point haut (311A) au point bas (311B) de la rampe (311) de la première portion de la seconde partie (31) amène les mâchoires (21) à se déplacer de la position fermée à la position ouverte.

7. Système de gestion et de serrage de câble selon l'une quelconque des revendications 1 à 6, dans lequel la seconde partie (31) dudit au moins un dispositif de commande mécanique (30) comprend une deuxième portion qui a un bord (312) configuré de sorte qu'un coulissement de ladite première partie (32) le long de ce bord (312) amène les mâchoires (21) à être maintenues dans la position ouverte.

8. Système de gestion et de serrage de câble selon l'une quelconque des revendications 1 à 7, dans lequel la seconde partie (31) dudit au moins un dispositif de commande mécanique (30) comprend une troisième portion qui a une rampe (313) inclinée d'un point haut (313A) à un point bas (313B) qui sont agencés de sorte qu'un coulissement de ladite première partie (32) du point haut (313A) au point bas (313B) de la rampe (313) de la troisième portion de la seconde partie (31) amène les mâchoires (21) à se déplacer de la position ouverte à la position fermée.

9. Système de gestion et de serrage de câble selon l'une quelconque des revendications 1 à 8, dans lequel ledit au moins un dispositif de serrage (20) comprend une pluralité de dispositifs de serrage fixés sur ledit au moins un morceau (42) de tuyau (4),
ledit au moins un dispositif de commande mécanique (30) comprenant un dispositif de commande mécanique pour chaque dispositif de serrage (20).

10. Système de gestion et de serrage de câble selon l'une quelconque des revendications 1 à 9, dans lequel ledit au moins un dispositif de gestion de câble (10) comprend une pluralité de dispositifs de gestion de câble (10) comprenant chacun une roue à gorge (125).

11. Système de gestion et de serrage de câble selon l'une quelconque des revendications 1 à 10, dans lequel le système de gestion et de serrage de câble comprend une pluralité de morceaux (41, 42) de tuyau (4), prévus pour être assemblés les uns aux autres, chaque morceau (41, 42) de tuyau étant prévu avec au moins un dispositif de serrage (20), ledit au moins un dispositif de commande mécanique (30) comprenant un dispositif de commande mécanique pour chaque dispositif de serrage (20).

12. Système d'extraction en eau profonde comprenant :
un système de gestion et de serrage de câble selon l'une quelconque des revendications 1 à 11 ;
un tuyau rigide (4) formé par l'assemblage d'une pluralité de morceaux (42) de tuyau ;
un système de pompe (7) comprenant une pluralité de pompes (71, 72, 73, 74, 75, 76) fixées sur le tuyau rigide (4) ;
pour chaque pompe, un câble (51, 52, 53, 54, 55, 56) raccordé à ladite pompe et configuré pour fournir l'alimentation électrique à la pompe et permettre la communication entre la pompe et une station de contrôle ;
un véhicule (1004) qui est configuré pour rouler sur le lit marin et aspirer des matériaux, tels que des nodules de manganèse, qui sont présents sur le plancher marin ;
un tuyau flexible (1007) fixé au véhicule (1004) qui est configuré pour permettre d'aspirer lesdits matériaux par ledit tuyau flexible, et qui est raccordé audit tuyau (4) ;
un câble (57, 1007) raccordé audit véhicule (1004) et configuré pour fournir l'alimentation électrique au véhicule (1004) et permettre la communication entre le véhicule (1004) et la station de contrôle.

13. Ensemble comprenant un navire (1001) et un système d'extraction en eau profonde selon la revendication 12.

14. Procédé pour gérer et serrer au moins un câble (53) sur au moins un morceau (42) d'un tuyau (4), dans lequel ledit procédé comprend les étapes consistant à :
prévoir au moins un câble (53) qui pend d'une roue à gorge (125) ;
prévoir au moins un morceau (42) d'un tuyau, ayant un axe longitudinal (A42),
prévoir au moins un dispositif de serrage (20) fixé sur ledit au moins un morceau (42) de tuyau (4), ledit au moins un dispositif de serrage (20) ayant des mâchoires (21) définissant entre lesdites mâchoires, un passage débouchant (215) pour le câble (53),
lesdites deux mâchoires (21) étant relativement mobiles entre une position ouverte permettant l'introduction et la sortie du câble (53) par rapport audit passage débouchant (215) et une position fermée permettant de serrer le câble (53) lorsque le câble (53) s'étend entre les mâchoires (21) ;
permettre audit au moins un morceau (42) de tuyau (4) de se déplacer dans une direction parallèle audit axe longitudinal (A42) ; et
**caractérisé en ce que** le procédé comprend en outre l'étape consistant à :
avec au moins un dispositif de commande mécanique (30), commander automatiquement la position relative des mâchoires (21) dudit au moins un dispositif de serrage (20) en fonction de la position dudit au moins un dispositif de serrage (20) pendant le déplacement dudit au moins un morceau (42) de tuyau (4), pour serrer ou desserrer ledit au moins un câble (53) avec ledit au moins un morceau (42) de tuyau (4).
